# EUROPEAN PATENT APPLICATION

(11) **EP 1 185 068 A2**
(43) Date of publication of application: **06.03.2002**
(21) Application number: 01402215.6
(22) Date of filing: 23.08.2001
(51) Int. Cl.: H04M 3/533

(54) **Method and apparatus for voice messaging originated by mobile terminals**

(30) Priority: 30.08.2000 US 651734
(71) Applicant: Comverse Network Systems, Ltd., Tel Aviv 69710 (IL)
(72) Inventor: Lewin, Uri, Tel Aviv (IL); Porat, Chen, Ramat-Hasharon (IL)
(74) Representative: CAPRI SARL

(57) **Abstract**

An apparatus and method for transmission of information over an electronic network in the form of a user-to-user voice messaging service between mobile phone subscribers. A voice SMS system provides a handset interface layer coupled with a graphics user interface (GUI), mobile terminated SMS notifications and an interface for the utilization of the Personal Address Book (PAB) of the message sender to address messages. The interface layer manages both incoming and outgoing voice messages. The voice SMS system is device, platform and network protocol independent. Protocols include GSM, TDMA and CDMA.

Alternative technologies provided for the implementation of the mobile handset interface include:
- SIM Application Toolkit (SAT);
- Browser-based interface based on Wireless Application Protocol (WAP) or HTML or C-HTML; and
- Interactive Voice Response (IVR).

## Description

### FIELD OF THE INVENTION

The present invention relates generally to the transmission of information over an electronic network, and specifically to a voice messaging service between mobile phone subscribers utilizing a handset interface layer, SMS notification, and the Private Address Book (PAB) of the message sender to access phone numbers.

### BACKGROUND OF THE INVENTION

In the art of user-to-user messaging for cellular networks, currently, Short Message Service (SMS) is used for text messaging, known in the art as Mobile Originated SMS, and is supported by some of the cellular network standards, i.e. Global System for Mobile Communications (GSM) and Time Division Multiple Access (TDMA). The utilization of SMS is enabled and facilitated by use of a dedicated user interface on the handset. Using SMS, a short alphanumeric message of up to 160 alphanumeric characters can be sent to a mobile phone to be displayed there on the screen

For all forms of phone usage, Voicemail Call Answering is commonly available. In the art of voicemail, when a telephone call is not answered, the caller is offered to leave a message. Some voice-mail systems offer, in addition to the call answering function, inter-mailbox messaging or a message deposit function. The inter-mailbox messaging feature enables subscribers of the same voicemail system (with the same network operator) to send voice messages from one's voicemail box to that of another. The direct deposit feature enables direct deposit of a voice message at the destination voicemail box. However, for example, if neither the caller nor the recipient has a voice mailbox available, or if the two parties are subscribed to different telephone networks, it may not be feasible to leave a voice message. At times the calling party may prefer to leave a message and not hold a conversation, for example to avoid disturbance of the called party.

Thus, there is a need to provide a quick, user-friendly graphics user interface (GUI) method of managing mobile originated voice messaging between mobile phone end-users, and the method must be generally applicable, without the prerequisite of special subscription or provisioning for a pre-existing voice mailbox with the network operator, and with the flexibility of message interaction with all global mobile end-users outside a particular mobile network.

### SUMMARY OF THE INVENTION

Accordingly, it is a principal object of the present invention to overcome the limitations of existing voice messaging systems, and to provide improved methods and apparatus for mobile network Mobile Originated (MO) voice messaging.

It is another object of some aspects of the present invention to provide improved methods and apparatus for voice messaging where neither caller nor recipient has a voice mailbox.

It is a further object of some aspects of the present invention to provide improved methods and apparatus for equipping the mobile handset with an application interface layer that manages both outgoing and incoming voice messages, that provides notification to the recipient of recorded voice messages, and that enables the voice message recipient to respond in a simplified manner. The application interface layer providing these functions is defined herein as voice SMS. Voice SMS includes voice messaging to a mobile phone and/or to a wired phone.

It is a still further object of some aspects of the present invention to provide improved methods and apparatus for voice messaging that is device, platform and network protocol independent. Protocols include GSM, TDMA and Code Division Multiple Access (CDMA), for example.

In accordance with a preferred embodiment of the present invention, there is provided a system for sending and receiving outgoing and incoming voice messages over at least one mobile telephone network via send/receive devices of a message sender and a message receiver, said system including:
a voice SMS application server coupled with a message storage device and a notification server; and
an application user interface layer coupled with a graphic user interface (GUI) on at least one of the send/receive devices of the message sender and receiver, said application user interface layer communicating with said application server over said at least one telephone network for managing outgoing and incoming voice messages of said voice SMS application server.

In a preferred embodiment of the invention, the system is provided as a voice SMS platform, comprising a voice SMS server, and an application user interface layer coupled with a Graphic User Interface (GUI). There are many alternative technologies for the implementation of the mobile handset interface of the voice SMS capability, examples of which are:
Browser-based interface based on Wireless Application Protocol (WAP) or HTML or C-HTML;
SIM Application ToolKit (SAT), described hereinbelow; and
Interactive Voice Response (IVR).

A Subscriber Identity Module (SIM) is designed to be inserted into a mobile telephone. A SIM is a form of "smart" card, or chip embedded with information, which contains all subscriber-related data, such as phone numbers, service details, and memory for storing messages. With a SIM card, or plug-in variation, calls can be made from any valid mobile phone because the subscriber data--not the telephone's internal serial number--is used to make the call.

SAT is WAP's forerunner. WAP and SIM-oriented approaches to providing mobile data and Internet services each has its own advantages, making them useful for different purposes. SIM Application Toolkit enables operators to send applications over the air as short message service (SMS) or cell broadcast messages to update SIM cards with adapted or new services. SAT applications are built for a client server environment, and small programs can be created by network operators and other SIM card owners, including defining how a mobile phone talks to a bank card, or allowing users to download new ringing tones.

The basic platform functionality is the same for each of the three alternative interfaces, though each interface is characterized by differences in the channels used for data and instruction exchange between the handset and the voice SMS server.

In accordance with the inventive method, voice SMS messaging is accomplished without the requirement of placing a telephone call to the recipient, and without the requirement of a subscription by the sender or the receiver to a voice mailbox from a voice network operator. In the preferred embodiment, both sender and receiver access the service using a device, such as a mobile telephone, having a graphic user interface (GUI).

A preferred embodiment provides voice messaging for mobile network subscribers. On the client end of the invention, the mobile handset is equipped with an application interface layer that enables the user to manage both outgoing and incoming voice messages. On the server end, a voice storage server stores the mobile originated (MO) voice messages, and forwards the messages to the destination once they are retrieved. The server uses Mobile Terminated (MT) SMS to deliver real-time notifications (i.e. a New Voice SMS Received and a Message Receipt Confirmation notification).

Utilizing one of the three alternative voice SMS interfaces, the subscriber/caller enters a Send Session menu choice on the GUI and chooses the target number by selecting an entry out of his personal address book (PAB) (an entry may represent a single number or a mailing list) or by manual entry. The voice SMS server receives the service request along with the target number. On receipt of the Send Session request and number, the voice SMS server allocates a dynamic voice mailbox (if a box does not already exist for the intended recipient), enters Record Mode, and prompts the caller to start recording the voice SMS message.

Upon receipt of the End Session signal (phone hang up after message is left by sender) by the voice SMS server, a New Voice SMS notification is sent to the destination number via Mobile Terminated SMS (for mobile subscribers) or by utilizing other applicable notification methods available with other wireless and wire-line networks (e.g. Message Waiting Indication).

The receiving party may play the message with a "single click" by dialing the direct access number embedded in the New Voice SMS notification (utilizing the SEND handset button). Where a visual interface layer is available, the recipient may access his voice SMS Inbox by entering a voice SMS Receive Session. In the voice SMS Receive session the voice SMS server identifies the calling party by the Calling Line ID (CLI), and provides him with access to the voice SMS message Inbox through a visual interface. From the visual inbox interface the user may choose further optional functions, such as Call Return, Voice SMS Return (a return of a voice SMS message), SMS Return (a return TEXT message), Voice SMS Forward or Message Delete.

Since the service uses dynamic Inbox allocation, a purge mechanism based on aging factors is implemented for both message and inbox entries. The user's inbox size limit, and the aging periods for the purge mechanism, may be provisioned by the service provider. The voice SMS service flow involves two core notifications, both generated by the voice SMS server and delivered by an MT SMS. The first notification in the activation flow is the New voice SMS Received notification, which is sent to the message recipient, notifying him of the newly-recorded voice SMS message. The second notification is the Message Receipt Confirmation notification, which notifies the message originator that the message was retrieved. It is possible for the recipient to decide whether to send the Message Receipt Confirmation notification or not.

An important feature of the New Voice SMS Received notification is that the voice SMS server provides a direct access number embedded in the text notification. The user effectively dials that access number by pressing on the number, and "single clicking" the send button of the handset, then the voice SMS server receives the CLI and is activated to play the specific voice message.
A feature of the invention is that for the service deployment, neither the message originator, nor the message recipient, require any prior service subscription for a voice mailbox, nor are the parties required to be subscribers of the same mobile network.

Other features and advantages of the invention will become apparent from the following drawings and description.

### BRIEF DESCRIPTION OF THE DRAWINGS

For a better understanding of the invention with regard to the embodiments thereof, reference is made to the accompanying drawings, in which like numerals designate corresponding elements or sections throughout, and in which:
Fig. 1 is a schematic illustration of the voice SMS system environment, depicting a system for transmitting voice messages in accordance with a preferred embodiment of the present invention;
Fig. 2 is a flow chart that schematically illustrates the process of sending a message in accordance with a exemplary embodiment of the present invention; and
Fig. 3 is a schematic illustration of the process of receiving a message in accordance with an exemplary embodiment of the present invention.

### DETAILED DESCRIPTION OF THE PREFERRED EMBODIMENTS

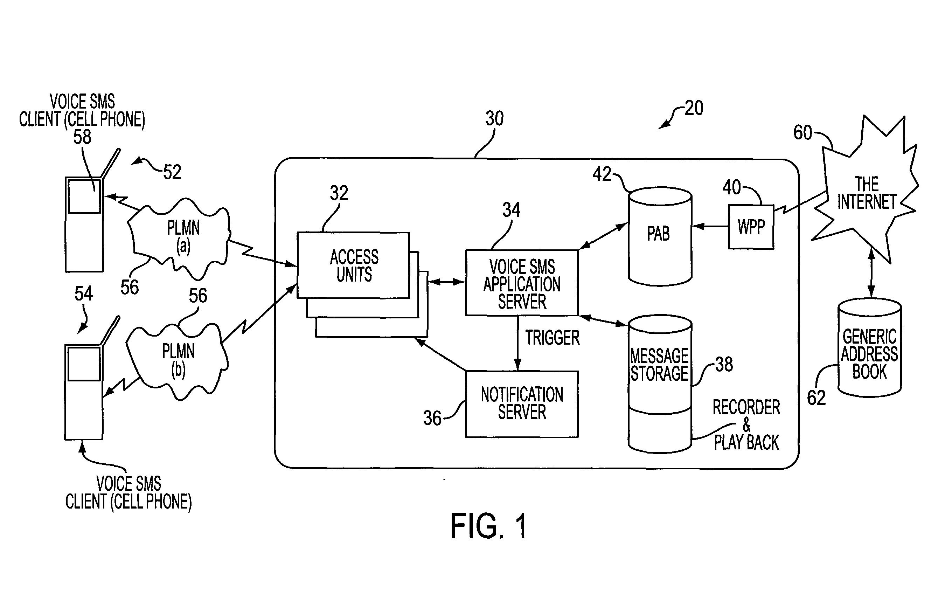

Reference is now made to Fig. 1, which is a schematic illustration of the voice SMS system environment 20, depicting a system 30 for transmitting mobile originated (MO) voice messages in accordance with a preferred embodiment of the present invention. As shown, voice SMS client sender 52 is sending a voice message to voice SMS client recipient 54. Both clients are connected to voice SMS system 30 via a Public Land Mobile Network (PLMN) 56, hereinafter also referred to as the telephony world, wherein sender PLMN 56a may or may not be the same as receiver PLMN 56b. Neither sender 52 nor recipient 54 is required to have a voice mailbox. The access units 32 are responsible for the connection of the voice SMS system to telephony world (PLMN) 56, wherein these units handle the signaling, the voice media and the data that pass between system 30 and the user's terminals.

In the recording stage of the message, a call session is established after the user selects the addressee in the Send Session choice on the GUI of his handset. Thus a connection is made between voice SMS system 30 and sender terminal 52. The voice SMS application server 34 allocates an Inbox in the storage server 38 for the storage of the message. Once the message is recorded and stored, voice SMS application server 34 triggers the notification server 36 to send receiver 54 a new message notification with an embedded direct access number via receiver's PLMN 56b. Notification server 36 is also triggered to send sender 52 a message receipt confirmation notification once the message is retrieved by receiver 54.

A Web Personal Provisioning 40 is a host sub-system that can provide Internet 60 access to generic address books 62 such as Knowbot, Netfind and which uses an open standard, such as Lightweight Directory Access Protocol (LDAP). Through WPP 40 the user may edit and update his PAB 42 details. The user may also edit and update his PAB 42 from the mobile client interface layer, using the GUI 58 on the handset. Sender 52 of the message may use his PAB 42 entries to select the message destination in the addressing stage of the messaging session.

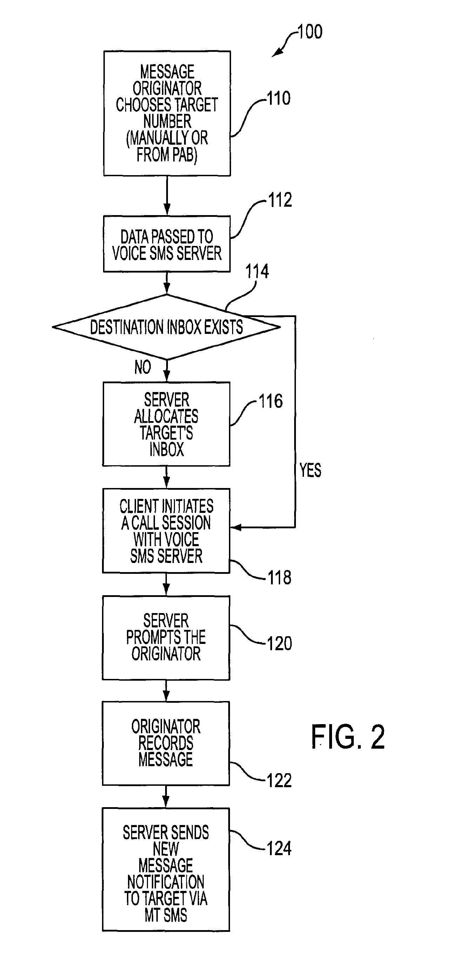

Fig. 2 is a flow chart that schematically illustrates the process 100 of sending a message, in accordance with an exemplary embodiment of the present invention.

The process begins when the message originator chooses the SEND option of the service. The menu options are displayed by the application interface layer in the mobile handset. In block 110, he is offered the option of either choosing a target number (one or many) from his PAB, or manually entering the numbers.

The user chooses a target number out of a list in the PAB by pressing on the number, then a target number selector enables the voice SMS server to process the number selected.

In block 112, the target number data is passed to the server (via SMS, WAP, Dual Tone Multi-Frequency (DTMF) or long-dial, depending on the type of interface used).

DTMF, or "touch tone", is a method used by the telephone system to communicate the keys pressed when dialing. Pressing a key on the phone keypad generates two simultaneous tones, one for the row and one for the column. These are decoded by the exchange or a decoding unit to determine which key was pressed.

In block 114, the server inquires if a destination Inbox has been allocated, and if not, after receiving the target number data (one or many) from the client application layer in the sender's handset, for example, in block 116 the server allocates an Inbox for the target.

Once the server is done with the Inbox setup in block 116, or alternatively if one already exists, in block 118, a call session between the originator's handset and the server is initiated by the application layer on the mobile handset (i.e., the WAP browser or the SAT).

The server identifies the caller using the CLI data, and then in block 120, a short prompt is played notifying the user that the recording session is on. In block 122, the user then records a message.

After the message originator hangs up, in block 124, the server sends an MT (Mobile Terminated) short message to the destination, notifying of the new voice SMS arrival. The notification includes an embedded access number.

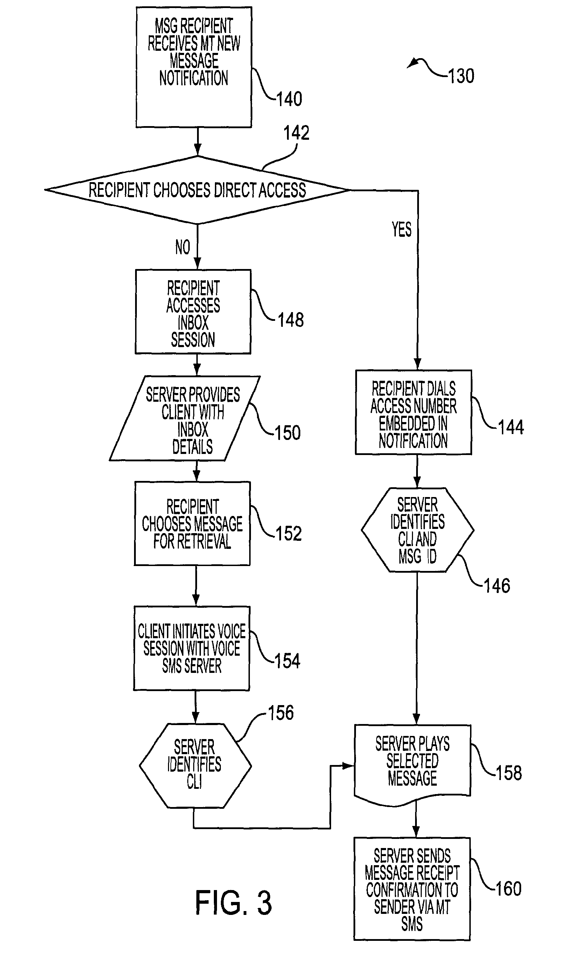

Fig. 3 is a schematic illustration of the process 130 of receiving a message, in accordance with an exemplary embodiment of the present invention. Fig. 3 continues the overall sequence of operation of message transmittal.

In block 140, the message recipient receives an MT New Message notification.

In block 142, the recipient decides whether to perform direct access, as opposed to an INBOX session described beginning with block 148, and if so, in block 144, the recipient dials the access number embedded in the notification.

In block 146, the server identifies the CLI and message ID details.

If the recipient chooses the alternative to direct access in block 142, then in block 148, the recipient enters an INBOX session, i.e., a data session.

When recipient accesses an INBOX session, in block 150 the server provides the client (the handset separate interface application layer) with INBOX details, i.e., the number of messages and a list of current Inbox messages marked as read and unread.

In block 152, the recipient chooses a message for retrieval, for example, in the case where several messages have accumulated since his last access.

In block 154, the client initiates a call session with the Voice SMS server. Thus the data session is closed and a voice session is opened. In block 156, the server identifies the appropriate CLI.

In block 158, the recipient, either by using a direct access from the notification 144 or by activating the visual INBOX interface 150 provided by the application layer, retrieves the message. The message recipient can listen to the received voice SMS either by using the "single click" access per block 144, or by choosing the specific message from the INBOX shelf of the available application layer, per block 150.

Once the recipient plays the message, the server can be programmed in block 160 to provide the message originator with a message receipt confirmation via MT short message.

After playing the message, the application provides the recipient with the following response options: Voice SMS Return, Call Return, SMS Return, Voice SMS Forward, Message Delete (SMS Return allows a prior art text message option).

The server can be programmed to perform Inbox purging using an aging mechanism.

### An SAT Voice SMS Interface

The SIM Application Toolkit (SAT) technology alternative is applicable for mobile networks that have standardized the SIM and the SAT, for example, GSM Phase 2+ and beyond. GSM is a standard for digital cell-phone communications.

When implementing an SAT client for the voice SMS, the handset user interface is implemented via special purpose menu entries and screens provided by the installed SAT voice SMS application, which uses SMS and long-dials to exchange data and requests with the voice SMS server. The New voice SMS Received and Message Receipt Confirmation notifications for the SAT are provided via SMS. The recording session initiation, and the playing of messages, are done using long-dial requests.

A long-dial request is a dialed long number that includes both the access short-code (specific message ID for the Retrieve option) and the target number for the Send option. For the selection of the target number (one or many) the voice SMS SAT application uses the local PAB details from the handset SIM card. For the creation and management of the voice SMS Inbox, the SAT application uses the data that is embedded in the New Message notifications.

Under the SAT interface, service access is provided through the deployment of long-dials. For instance, when the user enters the SEND option of the application and picks a target number from the address book, the application dials a long-dial that includes both the service request code (e.g. 123*) and the destination telephone number, including country code and area code (e.g. +0119147254323).

In a preferred embodiment the voice SMS server is capable of retrieving the data from the long-dials. When choosing to play a selected message, a long-dial is used, exactly as for the "single click" retrieval scheme, that includes both the service request code (e.g. 321*) and the specific message ID (provided by the voice SMS server as part of the New Message notification). Some of the off-line inbox manipulation instructions, e.g., message delete and, message forward, etc., are delivered via MO SMS, optionally using Unstructured Supplementary Services Data (USSD), generated by the SAT application.

USSD is a GSM service that allows high-speed interactive communication between the subscribers and applications across a GSM network. USSD service provides a mechanism for interactions that benefit from a "dialogue" structure. Other examples of such interactions include information services, banking services and customer care. The subscriber typically requests services by entering a specific short sequence of characters at the handset, such as *101#. This sequence is passed across the mobile network to the USSD Server and routed to the application. The application sends the response back to the subscriber through the USSD Server within the same signalling session. In this way, there is minimal delay between sending the query and receiving the response, other than the application processing the response.

### Implementing the voice SMS client through WAP Interface

A wireless application protocol (WAP) interface is implemented using Wireless Markup Language (WML) pages, requiring the utilization of WAP enabled handsets and a WAP gateway. Using the WAP browser the user may interact with, and view, the interface pages generated by an Integrated Media Unit (IMU). The IMU, which serves as the WAP access unit for the voice SMS system, is located between the voice SMS server (as an add-on thereto) and the WAP gateway. The IMU translates the user actions on the handset's browser into instructions for the voice SMS server, and uses the data provided by the voice SMS server for the creation of the WML interface pages.

For the support of the full voice SMS functionality, both the mobile handset WAP browser and the WAP gateway must support Wireless Telephony Application Interface (WTAI). The WTAI is the application interface layer between the WAP browser and the mobile equipment, a layer that enables the browser to initiate telephony functions in the mobile handset (e.g. Setup Call, Terminate Call etc.) in reaction to instructions received over the air (delivered through the WAP gateway). For the selection of the target number (one or many) in the send session, the Voice SMS WAP interface browses the PAB entries which reside on a PAB server (the IMU may act as a PAB server as a preliminary solution). The New Voice SMS Received and Message Receipt Confirmation notifications for the WAP option are provided via SMS, but the non-voice exchange is done through the WAP channel between the IMU and the handset WAP browser through the WAP gateway.

The utilization of the WAP implementation for the voice SMS involves both data sessions (i.e. browsing the application options and picking destination[s] out of an address book) and voice sessions (i.e. the actual recording/ playing of the voice messages) between the voice SMS client and the server. For each session type, different access units are used by the voice SMS system. The IMU, which serves as the access unit for WAP data sessions, is also responsible for the identification of the user. One of the mechanisms the IMU may use is the browser ID. For example, browsers of the company Phone.com have a unique UPID (Unwired Planet ID) that may be used for user identification.

The voice SMS system uses a browser ID - CLI cross-reference table, so that the Calling Line ID (CLI) could be used for the interrogation protocol with the voice SMS server. The WTAI capabilities of the WAP browser are applied when the user chooses to play or record a message, and when a voice (call) session is established.

### The voice SMS IVR Interface

The IVR interface is, itself, an interface alternative, but additionally, can enable service interaction between handsets with a visual interface, and handsets without a visual interface (including fixed line extensions). For the IVR option the voice SMS service is provided through a dial-up session with the voice SMS server. The sending party dials an access code to the voice SMS server, and it is then requested to digitize the target number, from this point on, the recording session is similar to the enhanced interface case. There is no integration with the PAB for the IVR option.

On the receiving end, a New Voice SMS Received SMS notification is received and with the same "single click" approach, the message can be retrieved. A Message Receipt Confirmation is sent via SMS to the message originator once the receiving party has played the message. The message recipient may also access the inbox and perform more complex features (such as Voice SMS Forward) by accessing the voice SMS server via dial-up for an IVR Receive Session. Voice SMS messages can generally be sent from a fixed line telephone. Voice SMS messages can also be received on a fixed line telephone with notification, for example, via a stuttertone, which is a series of short bursts of an audio dial tone.

Using the IVR interface, access is performed with short codes and IVR dialogs in a call session. For instance, the user dials the short code 123* to enter the voice SMS Send Session, and 321* to enter a Retrieval Session. Once in the Send Session, the user is requested to digitize the target number data, while in a Retrieval Session, the user is asked to select a specific message.

It will be appreciated that the preferred embodiments described above are cited by way of example, and that the present invention is not limited to what has been particularly shown and described hereinabove. Rather, the scope of the present invention, as defined by the appended claims, includes both combinations and sub-combinations of the various features described hereinabove, as well as variations and modifications thereof, which would occur to persons skilled in the art upon reading the foregoing description, and which are not disclosed in the prior art.

## Claims

1. A system for sending and receiving outgoing and incoming voice messages over at least one mobile telephone network via send/receive devices of a message sender and a message receiver, said system comprising:
a voice SMS application server coupled with a message storage device and a notification server; and
an application user interface layer coupled with a graphic user interface (GUI) on at least one of the send/receive devices of the message sender and receiver, said application user interface layer communicating with said application server over said at least one telephone network for managing outgoing and incoming voice messages of said voice SMS application server.

2. The system of claim 1, wherein said notification server generates notifications by a mobile terminated SMS.

3. The system of claim 1, wherein said message storage device comprises a memory device for storing at least one message Inbox.

4. The system of claim 1, wherein said message storage device comprises a memory device for storing at least one voice message.

5. The system of claim 1, further comprising a memory device for storing at least one user profile, which includes user PAB and user selected preferences.

6. The system of claim 5, further comprising a Web Personal Provisioning coupled to provide electronic network access to said at least one user profile.

7. The system of claim 1, wherein said application user interface layer includes a SEND option.

8. The system of claim 1, wherein said application user interface layer is configured to access and edit a PAB.

9. The system of claim 8, wherein said application user interface layer includes an option to select at least one telephone number from said PAB.

10. A voice SMS application server operative to send and receive voice messages and voice message notifications between a sender and a receiver according to a specified target number, said server comprising:
a PAB for storage of said target numbers;
a voice SMS message storage device;
a notification server;
at least one access unit to provide access to and from a mobile network; and
a controller operative to access and control said PAB, voice SMS storage device, notification server and said at least one access unit.

11. The server of claim 10, wherein said controller includes a direct access selector for enabling direct retrieval of messages from the voice SMS message storage device based on an embedded access number.

12. The server of claim 10, further comprising a Web Personal Provisioning.

13. A method for sending a mobile originated voice message comprising:
choosing a target number designating an intended message receiver;
connecting to a voice SMS server;
communicating said target number to said voice SMS server over a mobile communications network;
recording a message on said SMS server in an inbox corresponding to said target number;
embedding a direct access number corresponding to said recorded message in a new message notification signal; and
sending said new message notification signal to said intended receiver.

14. The method of claim 13, wherein said communicating and sending is performed via SMS.

15. The method of claim 13, wherein said communicating and sending is performed via a DTMF protocol.

16. The method of claim 13, wherein said communicating and sending is performed via long-dial.

17. The method of claim 13, further comprising activating an INBOX on a GUI application layer on a send/receive device of said intended message receiver.

18. The method of claim 17, wherein before recording a message, a sender is prompted that a recording session is starting.

19. A method for receiving a mobile originated voice message left by a sender for a receiver, said method comprising:
receiving a new message notification signal having an embedded direct access number;
connecting to a voice SMS server over a wireless communication network via an application user interface layer on a send/receive device of said receiver; and
retrieving the mobile originated voice message from the voice SMS server to said receiver.

20. The method of claim 19, wherein said retrieving is done by said receiver with "single click" access by means of said embedded direct access number.

21. The method of claim 19, and further comprising, notifying said sender via SMS that said mobile originated voice message has been retrieved.

22. The method of claim 19, wherein said application user interface layer includes a graphic user interface which enables said receiver to operate said send/receive device in at least one of the following modes:
voice SMS RETURN;
CALL RETURN;
SMS RETURN;
voice SMS FORWARD; and
MESSAGE DELETE.

23. The method of claim 22, wherein a voice message stored in said voice SMS server is purged after a preset time.

24. A method for enabling the sending and receiving of a plurality of voice messages and voice message notifications over at least mobile phone communication network between a sender and a receiver each having send/receive devices where at least one of the sender and receiver does not have a voice mailbox, comprising:
choosing at least one receiver telephone number associated with a message receiver;
sending said at least one receiver telephone number from a message sender to a voice SMS application server;
allocating a voice mailbox;
initiating a call session with said server;
recording a voice message;
embedding an access telephone number associated with said message in a notification and therewith notifying the send/receive device of said message receiver of the receipt of said voice message; and
calling the telephone number associated with said message and retrieving said message.

25. The method of claim 24, wherein said message sender has a voice mailbox and said message receiver does not.

26. The method of claim 24, wherein said message receiver has a voice mailbox and said message sender does not.

27. The method of claim 24, wherein said message sender has no voice mailbox and said message receiver has no voice mailbox.

28. A send/receive device for communicating over a wireless communications network and operative to communicate with a voice SMS application server, said send /receive device including an application user interface layer including a graphics user interface, for managing incoming and outgoing voice messages on said voice SMS application server.
